# EUROPÄISCHE PATENTSCHRIFT

(11) **EP 3 024 778 B1**
(45) Veröffentlichungstag und Bekanntmachung des Hinweises auf die Patenterteilung: **17.04.2019**
(21) Anmeldenummer: 14728964.9
(22) Anmeldetag: 06.06.2014
(51) Int. Cl.: C01B 3/22, B01J 16/00, B01J 19/24, B01J 19/00

(54) **REAKTOR ZUR FREISETZUNG VON WASSERSTOFF AUS FLÜSSIGER VERBINDUNG**
REACTOR FOR RELEASING HYDROGEN FROM A LIQUID COMPOUND
RÉACTEUR DESTINÉ À LA LIBÉRATION D'HYDROGÈNE À PARTIR D'UN COMPOSÉ LIQUIDE

(30) Priorität: 22.07.2013 DE 102013214313
(43) Veröffentlichungstag der Anmeldung: 01.06.2016
(73) Patentinhaber: Bayerische Motoren Werke Aktiengesellschaft, 80809 München (DE)
(72) Erfinder: EYPASCH, Martin, 80538 München (DE); ZENNER, Michael, 80993 Muenchen (DE); SCHWARZ, Aaron, 90762 Fürth (DE); WASSERSCHEID, Peter, 91054 Erlangen (DE)
(86) Internationale Anmeldenummer: PCT/EP2014/061837
(87) Internationale Veröffentlichungsnummer: WO 2015/010820

(56) Entgegenhaltungen:
- DE-A1-102010 038 491
- DE-A1-102011 079 858

## Beschreibung

Die Erfindung betrifft einen Reaktor zur Freisetzung von Wasserstoff aus flüssigen Verbindungen nach dem Oberbegriff des ersten Anspruchs und ein Verfahren zur Kraftstoffversorgung bzw. Energieversorgung eines Verbrauschers mittels des Reaktors.

Heute aktuelle Szenarien zur Energiebereitstellung aus regenerativen Quellen im großen Maßstab, zum Beispiel Windparks in der Nordsee oder Desertec erfordern als wesentliche technische Voraussetzung geeignete Wege, um große Energiemengen möglichst verlustfrei speichern und transportieren zu können. Nur so lassen sich saisonale Schwankungen in der Erzeugung ausgleichen, nur so kann ein effizienter Transport der Nutzenergie über große Distanzen realisiert werden.

Ein bevorzugter Ansatz zur technischen Realisierung eines Energietransport- und Energiespeichersystems ist die Beladung eines energiearmen Stoffes A mit Wasserstoff unter Bildung eines energiereichen Stoffes B, wobei der dabei benötigte Wasserstoff aus einer Elektrolyse von Wasser mit Hilfe von bevorzugt regenerativ erzeugter elektrischer Energie bereit gestellt wird. Dieser energetische Beladungsvorgang erfolgt nach dem Stand der Technik typischerweise durch eine katalytische Hydrierreaktion unter Druck. Die energetische Entladung des Stoffes B erfolgt durch katalytische Dehydierung bei niedrigen Drücken und hohen Temperaturen. Der dabei wieder freigesetzte Wasserstoff kann zum Beispiel in einer Brennstoffzelle oder in einem Verbrennungsmotor energetisch genutzt werden. Erfolgt die Wasserstofffreisetzung an Bord eines Fahrzeugs, kann der dabei bereit gestellte Wasserstoff direkt zum Betrieb des Fahrzeugs genutzt werden. Dem Stand der Technik bekannte Beispiele umfassen die Energiespeicherung in Form von CH₄, NH₃ oder Methanol. Bei der Wasserstoffentladung dieser Verbindungen entstehen die gasförmigen Stoffe CO₂ - im Falle von Methan und Methanol - bzw. Stickstoff - im Falle von NH₃.

Ein alternatives, bekanntes Konzept, bei dem die energiearme Form A eine Flüssigkeit darstellt und folglich bei der energetischen Entladung erneut eine Flüssigkeit erhalten wird, beschreibt die DE 10 2008 034 221 A1. Die energiearme Form A kann in diesem Fall als Flüssigkeit gelagert und transportiert werden, um zu einer energiereichen Zeit und an einem energiereichen Ort erneut mit Wasserstoff beladen zu werden. Solche Systeme werden als "Liquid Organic Hydrogen Carriers (LOHCs)" bezeichnet. Beispiele solcher LOHCs werden in der Patentanmeldung EP 1 475 349 A2 offenbart.

Bevorzugt handelt es sich bei den dem Stand der Technik bekannten LOHC-Systemen um Stoffpaare, bei denen der energiearme Stoff A eine hochsiedende, funktionalisierte, aromatische Verbindung darstellt, die im energetischen Beladungsvorgang hydriert wird. Reaktionssysteme zur katalytischen Wasserstofffreisetzung aus flüssigen Energiespeichermolekülen bestehen nach dem Stand der Technik aus Festbettreaktoren oder Slurry-Phasenreaktoren. In beiden genannten Reaktionssystemen bereitet das effiziente Einbringen von Wärme in den Reaktor Schwierigkeiten, da die Wärme über relativ große Distanzen von schlecht Wärme-leitenden Medien an den Reaktionsort transportiert werden muss. Außerdem werden die beiden genannten Reaktionssysteme durch die große, bei der dehydrierenden Entladung gebildete Wasserstoff-Gasmenge in ihrer Effizienz stark beeinträchtigt. In den, dem Stand der Technik bekannten Festbett- oder Slurry-Phasen-Reaktoren werden bei dieser Reaktion die katalytisch aktiven Oberflächen "freigeblasen", das heißt der Kontakt der zu entladenden Flüssigkeit mit der katalytischen Oberfläche wird durch bereits gebildetes Gas stark behindert. Dadurch ist die Geschwindigkeit der Wasserstofffreisetzung stark verlangsamt, was eine größere Freisetzungsapparatur für eine vorgegebene Leistung erfordert.

Der nächstliegende Stand der Technik, die DE 10 2011 079 858 A1, beschreibt einen Reaktor zur Freisetzung von Wasserstoff aus einer Wasserstoff tragenden, flüssigen Verbindung, mit einem druck- und temperaturfesten Reaktorgefäß, in dem wenigstens eine Funktion zur Bereitstellung des Wasserstoffs ausführbar ist, wobei das Reaktorgefäß wenigstens einen Körper enthält, der eine metallische Trägerstruktur besitzt, auf die eine feste, hochporöse Beschichtung aufgebracht ist, die katalytisch wirkende Substanzen für die Freisetzung von Wasserstoff aus flüssigen, Wasserstoff tragenden Verbindungen enthält.

Aufgabe der vorliegenden Erfindung ist es, einen Reaktor zur Freisetzung von Wasserstoff bereitzustellen, durch den die vorstehenden Nachteile des Standes der Technik überwunden werden. Außerdem ein Verfahren zur Versorgung eines Verbrauchers mit Wasserstoff durch den Betrieb des Reaktors.

Die Aufgabe der Erfindung wird durch die Merkmale des ersten Anspruchs gelöst. Vorteilhafte Aus- und Weiterbildungen und ein vorteilhaftes Verfahren zur Versorgung eines Verbrauchers mit Wasserstoff sind Inhalt der abhängigen Ansprüche.

Nach der Erfindung ist ein Reaktor zur Freisetzung von Wasserstoff aus einer Wasserstoff tragenden, flüssigen Verbindung, mit einem Reaktorgefäß, das wenigstens einen Körper mit metallischer Trägerstruktur enthält, auf die eine feste, hochporöse Beschichtung aufgebracht ist, die katalytisch wirkende Substanzen für die Freisetzung von Wasserstoff aus der flüssigen, Wasserstoff tragenden Verbindung enthält, wobei der Körper mit metallischer Trägerstruktur eine joulesche Eigenheizung oder eine Induktionsheizung besitzt, dadurch gekennzeichnet, dass für den Reaktor in Betriebsposition, der Körper mit metallischer Trägerstruktur in einem Rohr eines vertikal verlaufenden Rohrbündels eine von unten nach oben verlaufende, zylinderförmige Ausnehmung besitzt, die einen Gaskanal mit Sogwirkung bildet, zur Abführung des gasförmigen Wasserstoffs entlang einer lotrecht von unten nach oben verlaufenden Längsachse, die deckungsgleich ist mit der Längsachse der Ausnehmung.

Die Ausnehmung verbessert vorteilhafterweise als Gaskanal die Gas-/Flüssig-Phasen-Trennung des Wasserstoffs von der den Wasserstoff tragenden, flüssigen Verbindung. Außerdem wird mit Hilfe einer jouleschen Eigenheizung oder Induktionsheizung der beschichteten Katalysator-Struktur wird der Wärmeeintrag von außen ins Reaktorzentrum deutlich verbessert und es ist eine konstante Temperaturverteilung über die gesamte Trägerstruktur gegeben. Des Weiteren wird die Regelbarkeit des Wärmeeintrags deutlich erleichtert und beschleunigt, was ein schnelles, kontinuierliches und direktes Aufheizen gewährleistet.

Bei einer bevorzugten Ausführung der Erfindung besitzt der Körper mit metallischer Trägerstruktur wenigstens eine Ausnehmung, deren Volumen, bezogen auf das Reaktorgefäß und die geodätische Höhe, von unten nach oben gleich bleibt oder zunimmt. Eine solche, insbesondere nach oben sich vergrößernde Ausnehmung ist vorteilhaft für den Betrieb des Reaktors, insbesondere für die Abführung des Wasserstoffs vom Katalysatorkörper, genauer von den katalytisch wirksamen Oberflächen der Trägerstruktur, vor allem, wenn eine vertikale Betriebsposition des Reaktors gewählt ist. Der Wasserstoff kann aufgrund des Auftriebs zügig nach oben entweichen und es steht der Auftriebskraft, aufgrund der Ausnehmung im Körper mit metallischer Trägerstruktur, weniger Strömungswiderstand entgegen, was das Entweichen des Wasserstoffs aus dem Reaktor und damit den Prozess der Wasserstofffreisetzung beschleunigt, sowie die Kontaktfläche zwischen der wasserstofftragenden Verbindung und dem Katalysator vergrößert. Die Ausnehmungen im Körper mit metallischer Trägerstruktur können so abgestimmt werden, dass deren Volumenzunahme nach oben im Wesentlichen dem zunehmenden Volumen des abzuführenden Wasserstoffs entspricht oder sich proportional zu diesem vergrößert. Die Ausnehmung im Körper mit metallischer Trägerstruktur kann kegelförmig oder kegelstumpfförmig gestaltet sein, mit einer nach unten gerichteten Spitze des Kegels. Alternativ dazu kann die Ausnehmung aber auch zylinderförmig gestaltet sein, wobei der Zylinderumfang von unten nach oben stufenartig zunimmt. Wenn das Reaktorgefäß eine Längsachse besitzt, die lotrecht von unten nach oben verläuft, ist es sehr vorteilhaft, wenn die Längsachse des Reaktorgefäßes deckungsgleich ist mit der Längsachse der Ausnehmung. So können der Körper mit metallischer Trägerstruktur und dessen Ausnehmung symmetrisch zu deren Längsachse gestaltet und produziert werden.

Nach einer vorteilhaften Ausführungsform der Erfindung ist das Reaktorgefäß ein Rohrbündel aus parallel geschalteten Rohren, dessen einzelne, auf Abstand voneinander gehaltene Rohre jeweils wenigstens einen Körper mit einer Ausnehmung enthalten, der von der Wasserstoff tragenden Verbindung im jeweiligen Rohr umströmt wird, wobei ein Wärmetauschvorgang zwischen dem Rohrbündel und dessen Umgebung, dieses auf Reaktionstemperatur bringt, indem dessen äußere Oberfläche durch ein Heizmedium, in einem für das Heizmedium dichten Gehäuse, mit mindestens einer Zu-, einer Ablauföffnung und einem Zulaufsammelraum für das Heizmedium, beaufschlagt wird. Alternativ oder zusätzlich kann für jedes Rohr des Rohrbündels der darin befindliche Körper mit metallischer Trägerstruktur, ob alleine stehend oder mit der Rohrwand verbunden, durch joulesche Eigenheizung oder Induktionsheizung erwärmt werden. Die Wasserstofffreisetzungseinheit kann aufgrund des Rohrbündels vorteilhafterweise auch noch weitere Funktionen übernehmen, zum Beispiel bei der Phasen-trennung und der Wärmezufuhr. So kann die gesamte Vorrichtung mit mehreren integrierten Funktionen in einem Bauteil realisiert werden. Noch vorteilhafter für den Betrieb des Reaktors ist es, insbesondere für die Abführung des Wasserstoffs vom Katalysatorkörper, wenn die Betriebsposition des Reaktors so gewählt ist, dass die Rohre des Rohrbündels vertikal verlaufen. Der Wasserstoff kann so aufgrund des Auftriebs zügig in der Ausnehmung nach oben entweichen, was die Wärmeübertragung im Rohrbündel und damit den Prozess der Wasserstofffreisetzung beschleunigt und über das Heizmedium besser steuerbar macht.

Bei besonders vorteilhaften Ausführungen der Erfindung ist der Reaktor dadurch gekennzeichnet, dass die Rohre des Rohrbündels durch Wärmeübertragungslamellen verbunden sind. Wenn diese dann für das Heizmedium undurchlässig sind und die Rohre des Rohrbündels durch die Wärmeübertragungslamellen hindurchstoßen, kann das Heizmedium über die dann, insbesondere horizontal verlaufenden, Wärmeübertragungslamellen besonders effektiv Wärmeenergie auf die Rohre des Rohrbündels übertragen. Dabei stabilisieren die Wärmeübertragungslamellen das Rohrbündel mechanisch, was bei hohen Temperaturen letztlich Gewichtseinsparungen beim Reaktor ermöglicht, die wiederum eine effektive Wärmeübertragung auf die Wasserstoff tragende Verbindung bedeuten.

Weiter vorteilhaft ist es, wenn eine Leiteinrichtung für das Heizmedium vorgesehen ist, die dieses im Gehäuse im Bereich des Rohbündels in seiner Strömungsrichtung so umlenkt, dass die Rohre des Rohrbündels vom Strom des Heizmediums jeweils auf einem Teil ihrer Länge mit jeweils unterschiedlicher Strömungsrichtung beaufschlagt werden. Auf diese Weise wird die Menge des notwendigen Heizmediums wesentlich verringert, bei verbessertem Wärmeaustausch, da das Heizmedium das Rohrbündel mehrmals durchströmt und so länger im Reaktor wärmeabgebend verbleibt. Konstruktiv besonders vorteilhaft ist, wenn die Leiteinrichtung bestimmte Wärmeübertragungslamellen außerhalb des Rohrbündels stromrichtungsumkehrend verbindet. Dies kann zum Beispiel durch Rohrhälften, die mehrere Wärmeübertragungslamellen überbrückend, mit ihren beiden Schnittkanten in Axialrichtung an jeweils einer Längskante einer Wärmeübertragungslamelle angebracht sind. Werden zwei Rohrhälften, jeweils eine auf gegenüberliegenden Seiten des Rohrbündes in vertikaler Richtung, insbesondere um ihren Radius, versetzt an den Wärmeübertragungslamellen angebracht, wird die Strömung des Heizmediums zweimal in ihrer Richtung verändert, dieses wird dreimal zum Wärmetausch durch das Rohrbündel geleitet und das Heizmedium kann in den Reaktor auf einer Seite einströmen und diesen auf der gegenüberliegenden Seite verlassen, was einen konstruktiv einfachen Aufbau des und wenig Strömungsverluste im Reaktor mit sich bringt. Vor allem, wenn das Heizmedium ein Heißgas ist.

Mit einem so aufgebauten Reaktor kann vorteilhafterweise mit einem guten Wirkungsgrad aus der Wasserstoff tragenden Verbindung, mittels katalytischer Dehydrierung bei hoher Temperatur und niedrigem Druck, Wasserstoff freigesetzt werden, der in den Rohren, nach oben steigend, durch die sich nach oben vergrößernde Ausnehmung abgeführt wird, insbesondere zusammen mit der inzwischen im Reaktor dehydrierten flüssigen Verbindung, zur nachfolgenden Trennung.

Ein vorteilhaftes Verfahren zur mindestens anteiligen Versorgung eines in einem Brennraum Kraftstoff verbrennenden Verbrauchers mit Wasserstoff, insbesondere einer Brennkraftmaschine oder Brennstoffzelle eines Kraftfahrzeugs oder eines stationären Verbrauchers, mittels des Reaktors kann dann dadurch gekennzeichnet sein, dass der Reaktor aus einem ersten Speichertank für eine Wasserstoff tragende Verbindung über eine Zulaufleitung mit dieser versorgt wird und die bei hoher Temperatur und niedrigem Druck dehydrierte Verbindung dann über eine Ablaufleitung von dem Reaktor in einen zweiten Speichertank abgeleitet wird, wobei der Reaktor einen Brennraum des Verbrauchers über eine Verbindungsleitung mit Wasserstoff versorgt.

Das hier zur Anwendung kommende Konzept der "Energietragenden Stoffe" besitzt den Vorteil, dass es unserer bisherigen Energieversorgung durch fossile Energieträger, insbesondere Rohöl, technisch nahe steht und daher die vorhandene Infrastruktur, wie Schiffe, Raffinerien, Tankstellen, genutzt werden kann. Insbesondere können über "Energietragende Stoffe" Energieüberschüsse aus regenerativer Produktion gespeichert und mit dem Energiebedarf für Mobilität, elektrische Einrichtungen, Beheizung und Transport in der heutigen Infrastruktur verknüpft werden. Chemische Energiespeicher haben noch folgende Vorteile: Eine nahezu unbegrenzte, verlustfreie Speicherfähigkeit, eine hohe Energiedichte und geringe Kosten. Solche energietragenden Stoffe sind geeignet als Langzeitspeicher und Transportform von Energie.

Ein bevorzugtes Ausführungsbeispiel der Erfindung ist in der nachfolgenden Beschreibung und der zugehörigen Zeichnung näher dargestellt. Es zeigen:
- Figur 1:: eine räumliche, in Längsrichtung aufgeschnittene Darstellung eines erfindungsgemäßen Reaktors,
- Figur 2:: eine vergrößerte Darstellung eines Rohrbündels des Reaktors aus Figur 1 mit Wärmeübertragungslamellen und Leiteinrichtung,
- Figur 3:: eine grob schematisch gezeichnete Darstellung des Körpers mit metallischer Trägerstruktur für ein Rohr des Rohrbündels des Reaktors aus Figur 1, im Schnitt, mit einer zylinderförmigen Ausnehmung und einer jouleschen Heizeinrichtung und
- Figur 4:: eine grob schematisch gezeichnete Darstellung des Körpers mit metallischer Trägerstruktur für ein Rohr des Rohrbündels des Reaktors aus Figur 1, im Schnitt, mit einer zylinderförmigen Ausnehmung und einer Induktionsheizung.

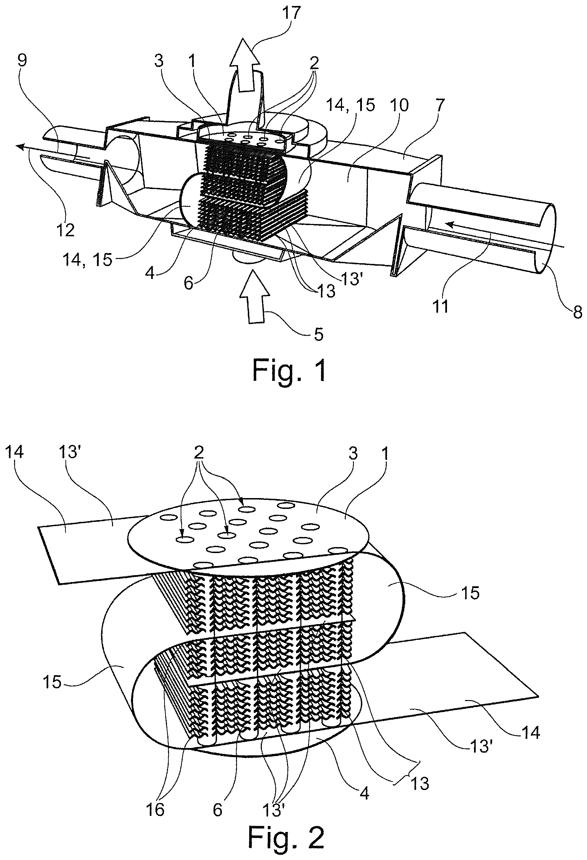

Figur 1 zeigt einen Reaktor zur Freisetzung von Wasserstoff aus einer Wasserstoff tragenden, flüssigen Verbindung, mit einem Reaktorgefäß 1, das als katalytische Reaktionssysteme nicht gezeichnete Körper mit metallischer Trägerstruktur enthält, auf die eine feste, hochporöse Beschichtung aufgebracht ist, die katalytisch wirkende Substanzen für die Freisetzung von Wasserstoff aus der flüssigen, Wasserstoff tragenden Verbindung enthält. Das Reaktorgefäß 1 ist ein Rohrbündel 6 aus parallel geschalteten Rohren 2, dessen einzelne, durch zwei Befestigungsplatten 3, 4 auf Abstand voneinander gehaltene Rohre 2 jeweils wenigstens einen Körper mit metallischer Trägerstruktur enthalten, der von der Wasserstoff tragenden, flüssigen Verbindung, symbolisch durch einen Strömungsrichtungspfeil 5 dargestellt, im jeweiligen Rohr 2 umströmt wird, wobei ein Wärmetauschvorgang zwischen dem Rohrbündel 6 und dessen Umgebung, die Wasserstoff tragende Verbindung 5 und den Körper mit metallischer Trägerstruktur in den Rohren 2 auf Reaktionstemperatur bringt, indem die äußere Oberfläche des Rohrbündels 6 durch ein Heizmedium, in einem für das Heizmedium dichten Gehäuse 7, mit mindestens einer Zu- 8, einer Ablauföffnung 9 und einem Zulaufsammelraum 10 für das Heizmedium, beaufschlagt wird. Das Heizmedium ist hier Heizgas und symbolisch dargestellt durch einen Strömungsrichtungspfeil 11 am Heißgaseintritt, der Zulauföffnung 8 und einen Strömungsrichtungspfeil 12 am Heißgasaustritt, der Ablauföffnung 9. Der Reaktor ist in Betriebsposition gezeichnet, in der die Rohre 2 des Rohrbündels 6 vertikal verlaufen. Der Wasserstoff kann so aufgrund des Auftriebs zügig mit der dehydrierten flüssigen Verbindung nach oben entweichen, symbolisch durch einen Strömungsrichtungspfeil 17 dargestellt, was die Wärmeübertragung im Rohrbündel 6 und damit den Prozess der Wasserstofffreisetzung beschleunigt und über das Heizmedium besser steuerbar macht.

Die Rohre 2 des Rohrbündels 6 sind durch Wärmeübertragungslamellen 13 verbunden. Diese sind für das Heizmedium undurchlässig und werden durch die Rohre 2 des Rohrbündels 6 durchstoßen. Dadurch kann das Heizmedium über die insbesondere horizontal verlaufenden, Wärmeübertragungslamellen 13 besonders effektiv Wärmeenergie auf die Rohre 2 des Rohrbündels 6 übertragen. Außerdem stabilisieren die Wärmeübertragungslamellen 13 das Rohrbündel 6 mechanisch, was bei hohen Temperaturen letztlich Gewichtseinsparungen beim Reaktor ermöglicht, die wiederum eine effektive Wärmeübertragung auf die Wasserstoff tragende Verbindung bedeuten.

Außerdem ist eine Leiteinrichtung 14 für das Heizmedium vorgesehen, die dieses im Gehäuse 7 im Bereich des Rohbündels 6 in seiner Strömungsrichtung so umlenkt, dass die Rohre 2 des Rohrbündels 6 vom Strom des Heizmediums 11 jeweils auf einem Teil ihrer Länge mit jeweils unterschiedlicher Strömungsrichtung beaufschlagt werden. So wird die Menge des notwendigen Heizmediums wesentlich verringert, bei verbessertem Wärmeaustausch, da das Heizmedium das Rohrbündel 6 mehrmals durchströmt und so länger im Reaktor wärmeabgebend verbleibt.

Die Leiteinrichtung 14 verbindet bestimmte Wärmeübertragungslamellen 13' außerhalb des Rohrbündels 6 stromrichtungsumkehrend durch Rohrhälften 15, die mehrere Wärmeübertragungslamellen überbrückend, mit ihren beiden Schnittkanten 16 in Axialrichtung an jeweils einer Längskante einer Wärmeübertragungslamelle 13' angebracht sind. Hier werden zwei Rohrhälften 15, jeweils eine auf gegenüberliegenden Seiten des Rohrbündes 6 in vertikaler Richtung um ihren Radius versetzt an den Wärmeübertragungslamellen 13' angebracht. Dadurch wird die Strömung 11 des Heizgases zweimal in ihrer Richtung verändert, dieses wird dreimal zum Wärmetausch durch das Rohrbündel 6 geleitet und das Heizgas verlässt dann den Reaktor auf der der Einströmseite (Pfeil 11) gegenüberliegenden Seite (Pfeil 12) .

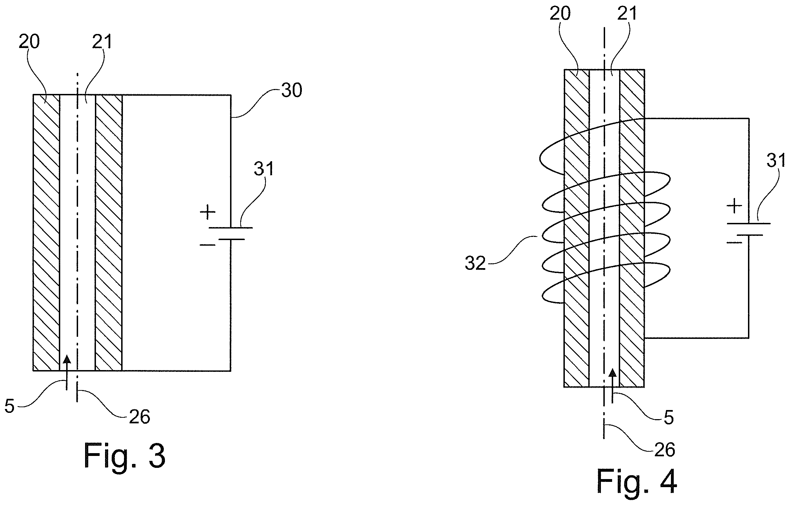

Figur 3 zeigt eine grob schematisch gezeichnete Darstellung des Körpers mit metallischer Trägerstruktur für ein Rohr 2 des Rohrbündels 6 des Reaktors 1 aus Figur 1, im Schnitt, mit einer zylinderförmigen Ausnehmung 21 und einer Einrichtung für joulesche Eigenheizung 30. Der poröse Körper mit metallischer Trägerstruktur, beschichtet mit den katalytisch wirkenden Substanzen für die Freisetzung von Wasserstoff aus der ihn im nicht gezeichneten Rohr 2 umgebenden flüssigen, Wasserstoff tragenden Verbindung 5, symbolisch durch den Strömungsrichtungspfeil 5, wird auch bezeichnet als Katalysatorstruktur 20, hergestellt zum Beispiel im so genannten Rapid-Prototyping Verfahren. Die dadurch erhaltene poröse Katalysatorstruktur 20 füllt das Rohr 2 im Wesentlichen aus, bis auf die Ausnehmung 21, die in die Katalysatorstruktur 20 eingearbeitet ist. Diese Ausnehmung 21 bildet einen Gaskanal zur Abführung des gasförmigen Wasserstoffs entlang einer lotrecht von unten nach oben verlaufenden Längsachse 26 des Rohrs 2, die deckungsgleich ist mit der Längsachse der Ausnehmung 21. Die Betriebsposition des Reaktors 1 ist so gewählt, dass die Rohre 2 des Rohrbündels 6 und damit die Ausnehmungen 21 vertikal verlaufen. Der Gaskanal verbessert die Gas-/Flüssig-Phasen-Trennung des Wasserstoffs von der den Wasserstoff tragenden, flüssigen Verbindung, symbolisch durch den Strömungsrichtungspfeil 5 dargestellt. Aufgrund des freien Volumens im Rohr 2 kann das Gas schneller in den freien Raum entweichen und das Reaktionsvolumen, die beschichtete Katalysatorstruktur 20 verlassen. Es entsteht ein Sog, der einen schnelleren Austrag der Gasphase sowie eine schnellere Trennung von Flüssig- und Gas-Phase bewirkt, da das Gas den Weg des geringsten Widerstandes sucht. Die flüssige Phase 5 verbleibt länger in dem Reaktionsvolumen. Dies erhöht die Effizienz der katalytisch aktiven Fläche, da die Kontaktzeit der flüssigen Phase 5 mit dem Katalysator 20 verlängert wird.

Dies ermöglicht eine Reduktion des Bauraums des Reaktors und eine Verringerung des Edelmetalleinsatzes bei der Katalysatorstruktur 20.

Die Einrichtung für joulesche Eigenheizung 30 besteht aus einer Stromquelle 31, durch die die poröse Katalysatorstruktur 20 zum Aufheizen unter Spannung gesetzt wird. Die hohe Stromdichte verursacht dann die joulsche Eigenheizung, die die Katalysatorstruktur direkt erwärmt, ohne dass ein Wärmetransport nötig ist.

Figur 4 zeigt eine grob schematisch gezeichnete Darstellung des Körpers mit metallischer Trägerstruktur für ein Rohr des Rohrbündels des Reaktors aus Figur 1, im Schnitt, mit einer zylinderförmigen Ausnehmung und einer Induktionsheizung. Für Figur 4 gilt dasselbe, das oben für Figur 3 erläutert wurde, mit dem Unterschied, dass anstatt joulescher Eigenheizung, eine Einrichtung zur induktiven Aufheizung zur Anwendung kommt. Hier wird die poröse Katalysatorstruktur 20 über einen an eine Stromquelle 31 angeschlossenen elektrisch leitfähigen Körper 32 durch in diesem erzeugte Wirbelstromverluste aufgeheizt. Der Körper 32 bildet eine die Katalysatorstruktur 20 umgebende Spirale, damit die Aufheizung ohne großen Wärmetransport möglich ist.

## Patentansprüche

1. Reaktor zur Freisetzung von Wasserstoff aus einer Wasserstoff tragenden, flüssigen Verbindung (5), mit einem Reaktorgefäß (1), das wenigstens einen Körper mit metallischer Trägerstruktur enthält, auf die eine feste, hochporöse Beschichtung aufgebracht ist, die katalytisch wirkende Substanzen für die Freisetzung von Wasserstoff aus der flüssigen, Wasserstoff tragenden Verbindung (5) enthält, wobei der Körper mit metallischer Trägerstruktur eine joulesche Eigenheizung oder eine Induktionsheizung besitzt, **dadurch gekennzeichnet, dass** für den Reaktor in Betriebsposition, der Körper mit metallischer Trägerstruktur in einem Rohr (2) eines vertikal verlaufenden Rohrbündels (6) eine von unten nach oben verlaufende, zylinderförmige Ausnehmung (21) besitzt, die einen Gaskanal mit Sogwirkung bildet, zur Abführung des gasförmigen Wasserstoffs entlang einer lotrecht von unten nach oben verlaufenden Längsachse (26) des Rohrs (2), die deckungsgleich ist mit der Längsachse der Ausnehmung (21).

2. Reaktor nach Anspruch 1, **dadurch gekennzeichnet, dass** der Körper mit metallischer Trägerstruktur wenigstens eine Ausnehmung besitzt, die, bezogen auf das Reaktorgefäß (1), von unten nach oben in ihren Querschnittsausmaßen größer wird, insbesondere in dem die Ausnehmung kegelförmig oder kegelstumpfförmig mit einer nach unten gerichteten Spitze des Kegels gestaltet ist oder in dem der Zylinderumfang von unten nach oben stufenartig zunimmt.

3. Reaktor nach einem der Ansprüche 1 oder 3, **dadurch gekennzeichnet, dass** das Reaktorgefäß (1) eine Längsachse besitzt, die lotrecht von unten nach oben verläuft.

4. Reaktor nach einem der Ansprüche 1 bis 3, **dadurch gekennzeichnet, dass** die Längsachse des Reaktorgefäßes (1) deckungsgleich ist mit der Längsachse der Ausnehmung.

5. Reaktor nach einem der Ansprüche 1 bis 4, **dadurch gekennzeichnet, dass** das Reaktorgefäß (1) ein Rohrbündel (6) aus parallel geschalteten Rohren (2) ist, dessen einzelne, auf Abstand voneinander gehaltene Rohre (2) jeweils wenigstens einen Körper mit einer Ausnehmung enthalten, der von der Wasserstoff tragenden Verbindung (5) im jeweiligen Rohr (2) umströmt wird, wobei ein Wärmetauschvorgang zwischen dem Rohrbündel (6) und dessen Umgebung, dieses auf Reaktionstemperatur bringt, indem dessen äußere Oberfläche durch ein Heizmedium (11, 12), in einem für das Heizmedium (11, 12) dichten Gehäuse (7), mit mindestens einer Zu- (8), einer Ablauföffnung (9) und einem Zulaufsammelraum (10) für das Heizmedium (11, 12), beaufschlagt wird.

6. Reaktor nach Anspruch 5 , **dadurch gekennzeichnet, dass** dessen Betriebsposition so gewählt ist, dass die Rohre (2) des Rohrbündels (6) vertikal verlaufen.

7. Reaktor nach Anspruch 5 oder 6, **dadurch gekennzeichnet, dass** die Rohre (2) des Rohrbündels (6) durch Wärmeübertragungslamellen (13, 13') verbunden sind.

8. Reaktor nach Anspruch 7, **dadurch gekennzeichnet, dass** die Wärmeübertragungslamellen (13, 13') für das Heizmedium (11, 12) undurchlässig sind und die Rohre (2) des Rohrbündels (6) durch diese hindurchstoßen.

9. Reaktor nach einem der Ansprüche 5 bis 8, **dadurch gekennzeichnet, dass** eine Leiteinrichtung (14) für das Heizmedium (11, 12) vorgesehen ist, die dieses im Gehäuse (7) im Bereich des Rohbündels (6) in seiner Strömungsrichtung so umlenkt, dass die Rohre (2) des Rohrbündels (6) vom Strom des Heizmediums (11, 12) jeweils auf einem Teil ihrer Länge mit jeweils unterschiedlicher Strömungsrichtung beaufschlagt werden.

10. Reaktor nach Anspruch 9, **dadurch gekennzeichnet, dass** die Leiteinrichtung (14) bestimmte Wärmeübertragungslamellen (13') außerhalb des Rohrbündels (6) stromrichtungsumkehrend verbindet.

11. Verfahren zur Verwendung des Reaktors nach einem der Ansprüche 5 bis 10, **dadurch gekennzeichnet, dass** das Heizmedium (11, 12) Heißgas ist.

12. Verfahren zur Verwendung des Reaktors nach einem der Ansprüche 5 bis 10, **dadurch gekennzeichnet, dass** im Reaktor, aus der Wasserstoff tragenden Verbindung (5), mittels katalytischer Dehydrierung unter Druck und bei hoher Temperatur, Wasserstoff freigesetzt wird, der in den Rohren (2) nach oben steigend abgeführt wird.

13. Verfahren zur mindestens anteiligen Versorgung eines Verbrauchers mit Wasserstoff, mittels eines Reaktors nach einem der Ansprüche 1 bis 10, **dadurch gekennzeichnet, dass** der Reaktor aus einem ersten Speichertank für eine Wasserstoff tragende Verbindung über eine Zulaufleitung mit dieser versorgt wird und die bei hoher Temperatur und niedrigem Druck dehydrierte Verbindung über eine Ablaufleitung von dem Reaktor in einen zweiten Speichertank abgeleitet wird, wobei der Reaktor einen Brennraum des Verbrauchers über eine Verbindungsleitung mit Wasserstoff versorgt.

## Claims

1. A reactor for releasing hydrogen from a hydrogen-bearing, liquid compound (5), having a reactor vessel (1) which comprises at least one body with metallic support structure, with a solid, highly porous coating applied to said at least one body, which coating comprises catalytically acting substances for the release of hydrogen from the liquid, hydrogen-bearing compound (5), wherein the body with metallic support structure has intrinsic Joule heating or induction heating, **characterised in that,** for the reactor in the operating position, the body with metallic support structure has a cylindrical cut-out (21) in a tube (2) of a vertically extending tube bundle (6), which cut-out runs from the bottom up and forms a gas channel with suction effect, for discharging the gaseous hydrogen along a longitudinal axis (26) of the tube (2), said axis running vertically from the bottom up and being congruent with the longitudinal axis of the cut-out (21).

2. A reactor according to claim 1, **characterised in that** the body with metallic support structure has at least one cut-out, the cross-sectional dimensions of which become larger from bottom to top based on the reactor vessel, more especially by the cut-out being conical or frustoconical with a downwardly directed tip of the cone, or by the cylinder circumference increasing in steps from the bottom up.

3. A reactor according to any one of claims 1 or 3, **characterised in that** the reactor vessel (1) has a longitudinal axis which runs vertically from bottom to top.

4. A reactor according to any one of claims 1 to 3, **characterised in that** the longitudinal axis of the reactor vessel (1) is congruent with the longitudinal axis of the cut-out.

5. A reactor according to any one of claims 1 to 4, **characterised in that** the reactor vessel (1) is a tube bundle (6) of individual tubes (2) connected in parallel, the individual tubes (2) of said bundle being held at a distance from each other and each comprising at least one body having a cut-out, with the hydrogen-bearing compound (5) in the tubes (2) flowing around their respective bodies, wherein a process of heat exchange between the tube bundle (6) and its surroundings brings said tube bundle to reaction temperature by subjecting its outer surface to the action of a heating medium (11, 12) in a housing (7) which contains the heating medium (11, 12) in a leakproof manner and comprises at least one feed opening (8), one drain opening (9) and one feed collection chamber (10) for the heating medium (11, 12).

6. A reactor according to claim 5, **characterised in that** the operating position of the reactor is selected such that the tubes (2) of the tube bundle (6) run vertically.

7. A reactor according to claim 5 or 6, **characterised in that** the tubes (2) of the tube bundle (6) are connected by heat transfer lamellae (13, 13').

8. A reactor according to claim 7, **characterised in that** the heat transfer lamellae (13, 13') are impervious to the heating medium (11, 12) and the tubes (2) of the tube bundle (6) protrude through said lamellae.

9. A reactor according to any one of claims 5 to 8, **characterised in that** a guide means (14) is provided for the heating medium (11, 12) and diverts the direction of flow of said heating medium in the housing (7) in the region of the tube bundle (6), such that the tubes (2) of the tube bundle (6) are each subjected to a flow of the heating medium (11, 12) over a part of their length, with a different direction of flow in each case.

10. A reactor according to claim 9, **characterised in that** the guide means (14) connects specific heat transfer lamellae (13') outside the tube bundle (6) so as to reverse the direction of flow.

11. A method for using the reactor according to any one of claims 5 to 10, **characterised in that** the heating medium (11, 12) is hot gas.

12. A method for using the reactor according to any one of claims 5 to 10, **characterised in that** in the reactor hydrogen is released from the hydrogen-bearing compound (5) by means of catalytic dehydrogenation under pressure and at high temperature and is discharged rising upwardly into the tubes (2).

13. A method for supplying a consumer at least proportionally with hydrogen by means of a reactor according to any one of claims 1 to 10, **characterised in that** the reactor is supplied with a hydrogen-bearing compound from a first storage tank via a feed line, and the compound dehydrogenated at high temperature and low pressure is then led off via a drain line from the reactor into a second storage tank, wherein the reactor supplies a combustion chamber of the consumer with hydrogen via a connecting line.

## Revendications

1. Réacteur permettant de libérer de l'hydrogène à partir d'un composé liquide (5) porteur d'hydrogène, comportant une cuve réactionnelle (1) qui renferme au moins un corps ayant une structure de support métallique sur lequel est appliqué un revêtement solide fortement poreux qui renferme des substances catalytiquement actives pour la libération d'hydrogène à partir du composé (5) liquide porteur d'hydrogène, le corps ayant une structure de support métallique ayant un chauffage propre par effet joule ou un chauffage par induction,
**caractérisé en ce que**
lorsque le réacteur est dans la position de fonctionnement, le corps ayant une structure de support métallique comporte un évidement cylindrique (21) comporte dans un tube (2) d'un faisceau de tubes (6) s'étendant verticalement un évidement cylindrique (21) s'étendant du bas vers le haut qui forme un canal de gaz à effet d'aspiration permettant d'évacuer l'hydrogène gazeux le long de l'axe longitudinal (26) du tube (2) s'étendant verticalement du bas vers le haut qui coïncide avec l'axe longitudinal de l'évidement (21).

2. Réacteur conforme à la revendication 1,
**caractérisé en ce que**
le corps ayant une structure de support métallique comporte au moins un évidement dont, par rapport à la cuve réactionnelle (1) l'étendue de la section devient plus grande du bas vers le haut, en particulier, dans lequel l'évidement est réalisé en forme de cône ou de tronc de cône avec une pointe dirigée vers le bas, ou dans lequel la périphérie du cylindre augmente graduellement du bas vers le haut.

3. Réacteur conforme à l'une des revendications 1 à 3,
**caractérisé en ce que**
la cuve réactionnelle (1) a un axe longitudinal qui s'étend verticalement du bas vers le haut.

4. Réacteur conforme à l'une des revendications à à 3,
**caractérisé en ce que**
l'axe longitudinal de la cuve réactionnelle (1) coïncide avec l'axe longitudinal de l'évidement.

5. Réacteur conforme à l'une des revendications 1 à 4,
**caractérisé en ce que**
la cuve réactionnelle (1) est constituée par un faisceau (6) de tubes (2) parallèles, dont les tubes (2) individuels, maintenus à distance les uns des autres renferment chacun au moins un corps ayant un évidement autour duquel circule le composé porteur d'hydrogène (5) dans chaque tube (2), un processus d'échange de chaleur entre le faisceau de tubes (6) et son environnement portant celui-ci à la température réactionnelle du fait que sa surface externe est soumise à l'action d'un fluide de chauffage (11, 12) dans un boîtier (7) étanche à ce fluide de chauffage (11, 12) ayant au moins une ouverture d'entrée (8) et une ouverture d'évacuation (9) et une chambre collectrice d'entrée (10) du fluide de chauffage (11,12).

6. Réacteur conforme à la revendication 5,
**caractérisé en ce que**
sa position de fonctionnement est choisie de sorte que les tubes (2) du faisceau de tubes (6) s'étendent verticalement.

7. Réacteur conforme à la revendication 5 ou 6,
**caractérisé en ce que**
les tubes (2) du faisceau de tubes (6) sont reliés par des lamelles de transfert de chaleur (13, 13').

8. Réacteur conforme à la revendication 7,
**caractérisé en ce que**
les lamelles de transfert de chaleur (13, 13') sont imperméables au fluide de chauffage (11, 12) et les tubes (2) du faisceau de tubes (6) sont frappés par celui-ci.

9. Réacteur conforme à l'une des revendications 5 à 8,
**caractérisé en ce qu'**
il est prévu un dispositif de guidage (14) du fluide de chauffage (11, 12) qui redirige le sens de circulation de celui-ci dans le boîtier (7) dans la zone du faisceau de tubes (6) de sorte que les tubes (2) de ce faisceau de tubes (6) soient respectivement sollicités par le flux du fluide de chauffage (11, 12) sur une partie de leur longueur avec des sens de circulation différents.

10. Réacteur conforme à la revendication 9,
**caractérisé en ce que**
le dispositif de guidage (14) relie des lamelles de transfert de chaleur (13') déterminées en inversant le sens de circulation à l'extérieur du faisceau de tubes (6).

11. Procédé d'utilisation du réacteur conforme à l'une des revendications 5 à 10,
**caractérisé en ce que**
le fluide chaud (11,12) est un gaz chaud.

12. Procédé d'utilisation d'un réacteur conforme à l'une des revendications 5 à 10,
**caractérisé en ce que**
dans le réacteur et à partir du composé (5) porteur d'hydrogène, on libère par déshydrogénation catalytique sous pression et à haute température de l'hydrogène qui est évacué vers le haut dans les tubes (2).

13. Procédé permettant une alimentation au moins partielle d'un consommateur en hydrogène au moyen d'un réacteur conforme à l'une des revendications 1 à 10,
**caractérisé en ce que**
le réacteur est alimenté par une conduite d'entrée en un composé porteur d'hydrogène, à partir d'un premier réservoir de stockage de ce composé, et le composé déshydrogéné à haute température et sous faible pression est évacué du réacteur par une conduite d'évacuation, dans un second réservoir de stockage, le réacteur alimentant une chambre de combustion du consommateur en hydrogène par l'intermédiaire d'une conduite de liaison.
